# EUROPÄISCHE PATENTSCHRIFT

(11) **EP 0 799 430 B1**
(45) Veröffentlichungstag und Bekanntmachung des Hinweises auf die Patenterteilung: **04.02.2004**
(21) Anmeldenummer: 96931735.3
(22) Anmeldetag: 02.08.1996
(51) Int. Cl.: G02B 5/02, G02F 1/1335

(54) **ANORDNUNG MIT EINEM BELEUCHTUNGSKÖRPER MIT EINEM DIFFUSOR**
ARRANGEMENT INCLUDING A LIGHTING FITTING WITH A DIFFUSER
ARRANGEMENT AVEC UN CORPS D'ECLAIRAGE DOTE D'UN DIFFUSEUR

(30) Priorität: 19.10.1995 DE 19538893
(43) Veröffentlichungstag der Anmeldung: 08.10.1997
(73) Patentinhaber: ROBERT BOSCH GMBH, 70442 Stuttgart (DE)
(72) Erfinder: ESCHKE, Bernd, D-31162 Bad Salzdetfurth (DE); VOGT, Siegfried, D-31139 Hildesheim (DE); FLOHR, Heinrich, D-31137 Hildesheim (DE)
(86) Internationale Anmeldenummer: PCT/DE1996/001437
(87) Internationale Veröffentlichungsnummer: WO 1997/014981

(56) Entgegenhaltungen:
- FR-A- 2 705 484
- GB-A- 2 262 619
- US-A- 3 984 176
- US-A- 4 059 916
- PATENT ABSTRACTS OF JAPAN vol. 012, no. 008 (P-654), 12.Januar 1988 & JP,A,62 168116 (NEC CORP), 24.Juli 1987,

## Beschreibung

### Stand der Technik

Die Erfindung geht aus von einer Anordnung mit einem Beleuchtungskörper mit einem Diffusor nach den Merkmalen des Oberbegriffs des Hauptanspruchs. Häufig wird ein Beleuchtungskörper eingesetzt, um insbesondere transmissive Flüssigkristallanzeigen (LCD) gleichmäßig auszuleuchten. Dabei wird das Licht von vorzugsweise einer oder mehrerer seitlich angeordneten Lichtquellen in dem als lichtleiterwirkenden Diffusor geleitet. Dabei ist zu beachten, dass das Licht über die ganze Austrittsfläche bei einem guten Wirkungsgrad möglichst gleichmäßig verteilt wird. Dieses führt zu einer relativ großen Bauform, die die Anwendung für flache LCD-Anzeigen weniger geeignet erscheinen lässt. Insbesondere bei Kraftfahrzeugsanzeigen oder beim Autoradio ist aus Raumgründen ein dicker Beleuchtungskörper für eine LCD-Anzeige nicht geeignet.

Aus der US 3,984,176 ist eine reflektive Platte zur Hinterleuchtung einer Flüssigkristallanzeige bekannt. Hierzu sind in ein lichtleitendes Material Körner mit einem anderen Brechungsindex eingebracht. Hierbei ist einerseits eine Hinterleuchtung der Flüssigkristallanzeige mit von einer Lichtquelle ausgestrahlten Lichts, aber auch eine reflektive Beleuchtung mittels Tageslicht möglich.

Aus der FR 2 705 484 A1 ist eine Hinterleuchtungsvorrichtung bekannt, bei der parallel zu einem Lichtleiter, in den das Licht einer Lichtquelle eingekoppelt wird, ein Modulator angeordnet ist. Der Modulator ist als eine Flüssigkristallzelle ausgeführt, die zwischen einem transparenten und einem lichtstreuenden Zustand geschaltet werden kann. In Abhängigkeit von dem Zustand des Modulators wird das Licht aus dem Lichtleiter entweder in Richtung eines Beobachters ausgekoppelt oder in Totalreflexion weitergeleitet.

Aus der US 4,059,916 ist ein diffuser Lichtleiter zur Beleuchtung bekannt, der eine ebene Platte besitzt, die keilförmig ausläuft. Hierdurch wird die Lichtauskopplung in Bereichen des Lichtleiters, die entfernt von der Lichtquelle sind, verstärkt.

Aus der JP 62-168116 ist eine diffuse Lichtleiterplatte bekannt, bei der an den schmalen Seitenflächen ein Spiegel angeordnet ist.

### Vorteile der Erfindung

Die erfindungsgemäße Anordnung mit einem Beleuchtungskörper mit den kennzeichnenden Merkmalen des Hauptanspruchs hat demgegenüber den Vorteil, dass der Diffusor nur wenige Millimeter dick ausgebildet ist und dennoch eine homogen verteilte Leuchtdichte auf seiner Austrittsfläche abgibt. Zusammen mit einer LCD-Anzeige ist die gesamte Einheit nur wenige Millimeter stark, so dass sie vorzugsweise auch in einer Kraftfahrzeuganzeige oder einem Autoradio verwendbar ist. Durch den einfachen und flachen Aufbau sind des weiteren in vorteilhafter Weise die Herstellkosten entsprechend niedrig. Durch die geringe Dämpfung des Diffusors wird des weiteren ein günstiger Wirkungsgrad der Ausleuchtung erreicht.

Die gute Effizienz des Diffusors wird im Prinzip dadurch erreicht, dass in dem Lichtleiter transparente Kugeln oder Partikel eindiffundiert werden, die gegenüber dem Diffusor einen unterschiedlichen Brechungsindex aufweisen. Dadurch wird vorteilhaft das Licht im Grenzübergang zwischen dem Lichtleiter und den Kugeln oder Partikeln umgelenkt und diffus verteilt.

Besonders vorteilhaft ist, dass die Lichtquellen von einer Steuerung versorgt werden, die bei Berühren der Anzeige oder eines Bedienelementes für eine vorgegebene Zeit heller geschaltet werden. Dieses ist insbesondere bei Verwendung in einem Kraftfahrzeug wichtig. So kann z. B. bei Nachtfahrten die Grundhelligkeit der Anzeige relativ dunkel sein, um ein Blenden des Fahrers zu vermeiden. Beim Berühren eines Bedienelementes oder eines entsprechenden Sensors der Anzeige wird dann für eine vorgegebene Zeitspanne die Leuchtdichte erhöht, so dass die Anzeige dann deutlicher sichtbar ist. Nach Beendigung der Bedienfunktion oder Ablauf der vorgegebenen Zeit kann die Anzeige dann wieder in den Schlafmodus zurückschalten. Dadurch wird vorteilhaft die Sicherheit im Fahrzeug erhöht.

Durch die in den abhängigen Ansprüchen aufgeführten Maßnahmen sind vorteilhafte Weiterbildungen und Verbesserungen der im Hauptanspruch angegebenen Anordnung möglich. Der Wirkungsgrad des Diffusors wird noch dadurch verbessert, dass an einer oder mehreren von der Austrittsfläche abgewandten Seiten des Diffusors Reflektoren angeordnet sind. Dadurch wird das Streulicht zusätzlich in Richtung zur Austrittsfläche geleitet so dass eine weitere Verbesserung des Wirkungsgrades erreicht wird.

Als Lichtquelle eignen sich bevorzugt Lampen, Röhren oder Leuchtdioden, da diese handelsüblich sind.

Bei Anordnung der Lichtquelle an einer Stirnseite des Diffusors wird vorteilhaft erreicht, dass die Dicke des Diffusors durch die Anordnung der Lichtquelle nicht erhöht wird. Außerdem kann im Reparaturfall die Lichtquelle leicht erneuert werden.

Mit dem Beleuchtungskörper wird eine transmissive LCD-Anzeige beleuchtet, da die LCD-Anzeige von sich aus kein Licht aussendet.

### Zeichnung

Drei Ausführungsbeispiele der Erfindung sind in der Zeichnung dargestellt und in der nachfolgenden Beschreibung näher erläutert. Es zeigen Figur 1 ein erstes Ausführungsbeispiel, Figur 2 ein zweites Ausführungsbeispiel, Figur 3 zeigt ein drittes Ausführungsbeispiel, jeweils ohne zugehörige Bedienelemente und Steuerung dargestellt, Figur 4 zeigt eine Draufsicht auf eine LCD-Anzeige, Figur 5 zeigt ein Diagramm und Figur 6 zeigt ein Blockschaltbild.

### Beschreibung der Ausführungsbeispiele

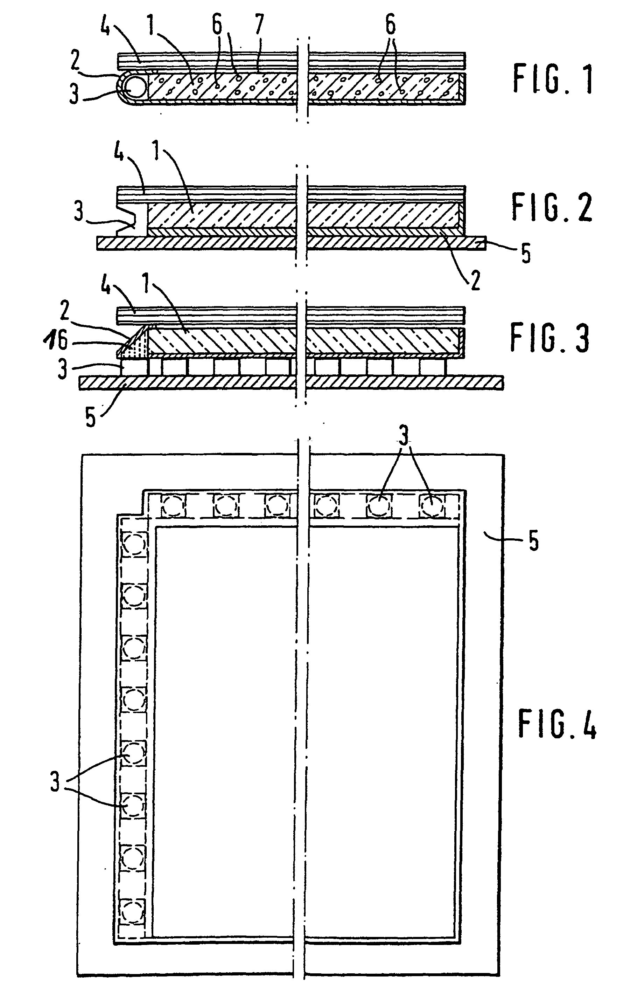

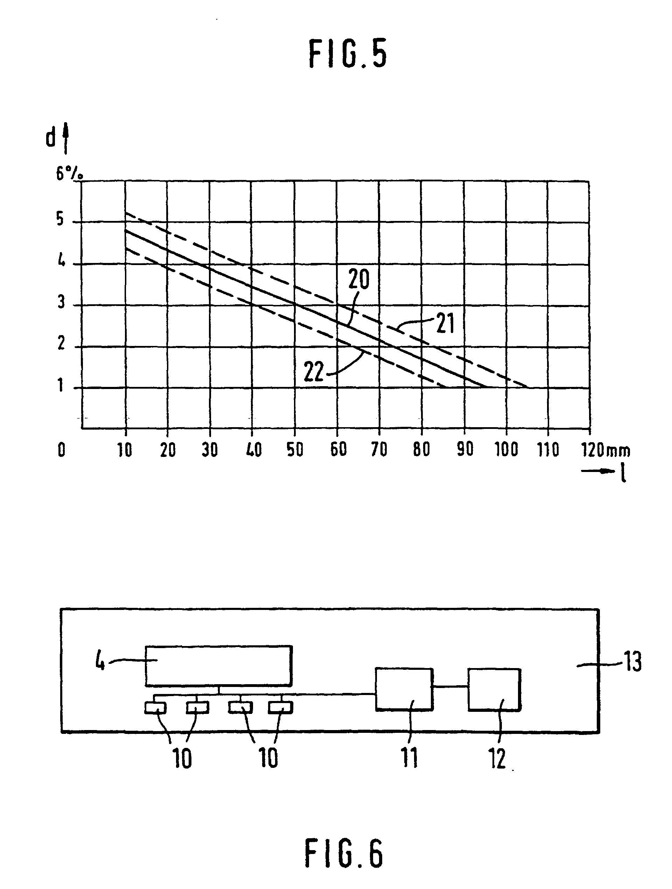

Figur 1 zeigt im Querschnitt einen Diffusor 1, der als flache, transparente Scheibe beispielsweise von drei Millimeter Dicke ausgebildet ist. Er hat an seiner Unterseite und den Seitenflächen einen Reflektor 2, während seine Oberseite, die Austrittsfläche 7 für den Lichtaustritt freigelassen ist. An der linken Seite ist wenigstens eine Lichtquelle als Lampe, Röhre oder Leuchtdiode (LED) angeordnet. Die Lichtquelle 3 sendet ihr Licht in den Diffusor 1, das zur Austrittsfläche 7 hin umgelenkt wird. Oberhalb der Austrittsfläche 7 ist eine transmissive Flüssigkristallanzeige (LCD-Anzeige) 4 angeordnet. Die LCD-Anzeige 4 wird dabei von dem Licht der Lichtquelle 3 durchflutet. Der Diffusor 1 enthält eine Vielzahl von kleinen Kugeln oder Partikeln 6, die gegenüber dem Material des Diffusors 1 einen unterschiedlichen Brechungsindex aufweisen. Dadurch wird das Licht der Lichtquelle 3 an den Grenzflächen zwischen den Kugeln bzw. den Partikeln 6 und dem Diffusor diffus gestreut und somit gleichmäßig verteilt. Die Anzahl der Kugeln oder Partikel wird später anhand der Figur 5 näher erläutert.

Figur 2 zeigt ein zweites Ausführungsbeispiel, bei dem anstelle einer Glühlampe eine Leuchtdiode seitlich angeordnet ist. Bei diesem Ausführungsbeispiel ist die Anordnung über den Reflektor 2 auf einer gedruckten Platine (PCB) 5 befestigt. Beim dritten Ausführungsbeispiel gemäß Figur 3 sind zwischen der gedruckten Platine 5 und dem Diffusor 1 mehrere Leuchtdioden 3 angeordnet, wobei an einer Stirnseite das Licht einer weiteren Leuchtdiode 3 auch über einen Spiegel 16 in den Diffusor umgelenkt werden kann. Der Reflektor 2 ist an den Berührungsstellen zu den Leuchtdioden 3 lichtdurchlässig.

Figur 4 zeigt in Draufsicht schematisch die Anordnung der Lichtquellen 3 an zwei Stirnflächen des Diffusors 1. Dabei kann die Anzahl der Lichtqullen 3 auf die gewünschten Erfordernisse abgestimmt werden. Die Lichtquellen 3 sind vorzugsweise auf der gedruckten Platine 5 montiert, so daß sie zusammen mit der LCD-Anzeige 4 eine kompakte Einheit bilden.

Im folgenden wird die Funktionsweise dieser Anordnung näher erläutert. Der Diffusor 1 besteht im wesentlichen aus einem transparenten Kunststoffmaterial, in dem Kugeln oder Partikel 6 mit einem anderen Brechungsindex eindiffundiert sind. Um einerseits eine möglichst gleichmäßige Lichtverteilung zu erhalten und andererseits einen guten Wirkungsgrad für die Transmission des Lichtes zu erreichen, ist die Größe der Kugeln oder Partikel 6, die Homogenität der Verteilung im Diffusor 1 sowie die Anzahl der Kugeln oder Partikel 6 entsprechend den gewünschten Bedingungen einzudiffundieren. Figur 5 zeigt dabei ein Diagramm über die Diffusionsdotierung d in der Y-Achse und der Lichtsauskoppellänge 1 in Millimeter in der X-Achse. Die Kurve 20 zeigt die mittlere Lichtauskoppellänge 1 in Abhängigkeit von der Diffusionsdotierung. Die beiden Randkurven 21, 22 geben den Streubereich an. Anhand dieser Kurven läßt sich somit je nach Dotierung d eine gewünschte Lichtauskoppellänge einstellen. Die Größe der Kugeln oder Partikel 6 kann entsprechend experimentell ermittelt werden. In Verbindung mit der Beleuchtungseinrichtung, d.h. mit der Art und der Anzahl der Lampen kann somit die Leuchtdichte in der Austrittsfläche 7 gesteuert werden.

Figur 6 zeigt ein schematisches Blockschaltbild für die Helligkeitssteuerung, das beispielsweise für ein Autoradio in einem Kraftfahrzeug verwendet werden kann. Es zeigt die LCD-Anzeige 4 sowie Bedienelemente 10. Die Bedienelemente 10 und die LCD-Anzeige 4 sind über Leitungen mit einer Steuerung 11 verbunden. Die Steuerung 11 wird von einer Spannungsquelle 12 gespeist. Die Steuerung 11 und die Spannungsquelle 12 sind an geeigneter Stelle im Autoradio 13 angebracht. Die Grundhelligkeit wird nun im Schlafmodus derart eingestellt, daß die Bedienelemente 10 und/oder die LCD-Anzeige 4 noch erkennbar sind, ohne daß eine Blendwirkung ausgeht. Wird nun ein Sensor aktiviert oder eine der Tasten 10 berührt, dann wird dies von der Steuerung 11 erkannt und die Lampen 3 des Diffusors 1 so hell gesteuert, daß die Bedienelemente 10 oder die Anzeige 4 deutlich ablesbar sind. Nach einer vorgegebenen Zeit oder nach Beendigung der Bedienung steuert die Steuerung 11 die Lampen 3 wieder in den Schlafmodus zurück, damit der Fahrer nicht mehr geblendet wird. Im Gegensatz zu bekannten Beleuchtungskörpern wird vorteilhaft beim Erfindungsgegenstand auch im Schlafmodus noch eine sehr gleichmäßige Lichtverteilung an der Austrittsfläche 7 erreicht.

## Patentansprüche

1. Anordnung zur Beleuchtung einer LCD-Anzeige (4) mit wenigstens einer Lichtquelle (3) und mit einem Diffusor (1), in den das Licht der wenigstens einen Lichtquelle (3) einkoppelbar ist und aus dem das Licht an einer Austrittsfläche (7) des Diffusors (1) auskoppelbar ist, wobei innerhalb des Diffusors (1) transparente Kugeln oder Partikel (6) mit einem gegenüber dem Diffusor (1) unterschiedlichen Brechungsindex angeordnet sind, wobei die transparenten Kugeln oder Partikel (6) ausgebildet sind, dass von der wenigstens einen Lichtquelle (3) einfallende Licht in Abhängigkeit von der Anzahl und/oder der Größe der transparenten Kugeln oder Partikel (6) und/oder deren Homogenität im Diffusor (1) an der Austrittsfläche (7) des Diffusors (1) auszugeben, wobei Bedienelemente (10) vorgesehen sind sowie eine Steuerung (11), die eine Grundhelligkeit der wenigstens einen Lichtquelle (3) in einem Schlafmodus derart einstellt, dass die LCD-Anzeige (4) noch erkennbar ist, ohne dass eine Blendwirkung ausgeht, und dass die Steuerung (11) der wenigstens einen Lichtquelle (3) bei einer Berührung eines Bedienelements (10) zur deutlicheren Sichtbarkeit der Anzeige die Lichtquelle (3) für eine vorgegebene Zeit heller schaltet.

2. Anordnung nach Anspruch 1, **dadurch gekennzeichnet, dass** der Diffusor (1) wenigstens an einer von der Austrittsfläche (7) entfernt liegenden Fläche einen Reflektor (2) aufweist.

3. Anordnung nach einem der vorherigen Ansprüche, **dadurch gekennzeichnet, dass** die wenigstens eine Lichtquelle (3) eine Glühlampe, eine Röhre oder eine Leuchtdiode ist.

4. Anordnung nach einem der vorherigen Ansprüche, **dadurch gekennzeichnet, dass** der Diffusor (1) als eine transparente Scheibe ausgeführt ist.

5. Anordnung nach Anspruch 4, **dadurch gekennzeichnet, dass** die Lichtquelle (3) wenigstens an einer Stirnseite des als eine flache Scheibe ausgeführten Diffusors (1) angeordnet ist.

6. Anordnung nach einem der Ansprüche 4 bis 5, **dadurch gekennzeichnet, dass** wenigstens an einer Stirnseite des als eine flache Scheibe ausgeführten Diffusors (1) ein Umlenkspiegel (6) vorgesehen ist.

7. Verwendung einer Anordnung nach einem der Ansprüche 1 bis 6 in einer Kraftfahrzeuganzeige, vorzugsweise für ein Autoradio.

## Claims

1. Arrangement for lighting an LCD display (4) having at least one light source (3) and having a diffusor (1) into which the light of the at least one light source (3) can be coupled and from which the light can be coupled out at an exit surface (7) of the diffusor (1), in which transparent balls or particles (6) with a refractive index different from the diffusor (1) are arranged inside the diffusor (1) in which the transparent balls or particles (6) are designed to output at the exit surface (7) of the diffusor (1) the light, incident from the at least one light source (3), as a function of the number and/or the size of the transparent balls or particles (6) and/or of their homogeneity in the diffusor (1), in which operating elements (10) are provided as is a controller (11) which sets a basic brightness of the at least one light source (3) in a sleep mode in such a way that the LCD display (4) can still be detected without having an effect of glare, and in which the controller (11) of the at least one light source (3) switches the light source (3) to be brighter for a prescribed time in the interest of a clearer visibility of the display in the event of touching of an operating element (10).

2. Arrangement according to Claim 1, **characterized in that** the diffusor (1) has a reflector (2) at at least one surface situated remote from the exit surface (7) .

3. Arrangement according to one of the preceding claims, **characterized in that** the at least one light source (3) is an incandescent lamp, a tube or a light-emitting diode.

4. Arrangement according to one of the preceding claims, **characterized in that** the diffusor (1) is designed as a transparent pane.

5. Arrangement according to Claim 4, **characterized in that** the light source (3) is arranged at least on one end face of the diffusor (1) designed as a flat pane.

6. Arrangement according to one of Claims 4 to 5, **characterized in that** a reflecting mirror (6) is provided at least on one end face of the diffusor (1) designed as a flat pane.

7. Use of an arrangement according to one of Claims 1 to 6 in a motor vehicle display, preferably for a car radio.

## Revendications

1. Arrangement pour éclairer un affichage LCD (4) comportant au moins une source de lumière (3) et un diffuseur (1) dans lequel la lumière de la source de lumière (3) au moins au nombre d'une peut être injectée et duquel la lumière peut être émise sur une surface de sortie (7) du diffuseur (1), des sphères ou des particules (6) transparentes dont l'indice de réfraction est différent par rapport au diffuseur (1) étant disposées à l'intérieur du diffuseur (1), les sphères ou les particules (6) transparentes étant conçues pour émettre à la surface de sortie (7) du diffuseur (1) la lumière inj ectée par la source de lumière (3) au moins au nombre d'une en fonction du nombre et/ou de la taille des sphères ou des particules (6) transparentes et/ou de leur homogénéité dans le diffuseur (1), dans lequel
des éléments de manoeuvre (10) ainsi qu'une commande (11) qui règle en mode veille une luminosité de base de la source de lumière (3) au moins au nombre d'une sont prévus de telle manière qu'on puisse encore distinguer l'affichage LCD (4) sans qu'il en résulte d'effet d'éblouissement et la commande (11) de la source de lumière (3) au moins au nombre d'une fait que la source de lumière (3) soit plus claire pendant un temps prédéterminé lorsqu'on effleure un élément de manoeuvre (10) pour qu'on puisse mieux voir l'affichage.

2. Arrangement selon la revendication 1,
**caractérisé en ce que**
le diffuseur (1) présente un réflecteur (2) au moins sur une surface qui est éloignée de la surface de sortie (7).

3. Arrangement selon au moins l'une des revendications précédentes,
**caractérisé en ce que**
la source de lumière (3) au moins au nombre d'une est une lampe à incandescence, un tube ou une diode électroluminescente.

4. Arrangement selon au moins l'une des revendications précédentes,
**caractérisé en ce que**
le diffuseur (1) est réalisé en tant que plaque transparente.

5. Arrangement selon la revendication 4,
**caractérisé en ce que**
la source de lumière (3) est disposée au moins sur un côté frontal du diffuseur (1) réalisé en tant que plaque plane.

6. Arrangement selon l'une des revendications 4 à 5,
**caractérisé en ce que**
l'on prévoit un miroir de déviation (6) au moins sur un côté frontal du diffuseur (1) réalisé en tant que plaque plane.

7. Utilisation d'un arrangement selon l'une des revendications 1 à 6, dans un affichage de véhicule automobile, de préférence pour un autoradio.
